# EUROPEAN PATENT SPECIFICATION

(11) **EP 1 492 263 B1**
(45) Date of publication and mention of the grant of the patent: **25.10.2006**
(21) Application number: 04005485.0
(22) Date of filing: 08.03.2004
(51) Int. Cl.: H04L 1/18, H04L 1/00

(54) **Radio communication apparatus and communication mode control method of a mobile communication system**
Funkkommunikationsgerät und Steuerungsverfahren des Kommunikationsmodus eines mobilen Kommunikationssystems
Appareil de communication radio et méthode de contrôle du mode de communication dans un système de communications mobiles

(30) Priority: 27.06.2003 JP 2003184491
(43) Date of publication of application: 29.12.2004
(73) Proprietor: KABUSHIKI KAISHA TOSHIBA, Minato-ku, Tokyo 105 (JP)
(72) Inventor: Terabe, Shigeo, Toshiba Corporation, Minato-ku, Tokyo 105-8001 (JP)
(74) Representative: HOFFMANN EITLE

(56) References cited:
- EP-A- 0 859 475
- EP-A- 1 229 748

## Description

The present invention relates to a radio communication apparatus used in a mobile communication system such as a mobile/cellular phone system, and a communication mode control method of adaptively changing and controlling the communication mode such as the transmission rate or modulation method in accordance with the transmission channel quality.

In a mobile communication network system, the transmission channel environment greatly changes under the influence of the multipath or interference wave. To maintain a proper communication quality in this environment, a method of adaptively changing the transmission rate or modulation method and a method of requesting retransmission of data when an error is detected in reception data have been adopted.

According to the former method, the reception quality of a pilot signal transmitted from a base station is measured by a mobile station. The mobile station notifies the base station of communication quality information representing the measurement result. The base station selects an optimal transmission rate or modulation method in accordance with the notified communication quality information. The base station transmits data toward the mobile station by using the selected transmission rate or modulation method.

The latter method is called automatic request for repetition (ARQ). According to the ARQ method, whether a packet received in the mobile station contains an error is determined. The mobile station transmits an ACK signal to the transmitting side if no error is contained, and a NACK signal if an error is contained. Upon reception of the NACK signal, the transmitting side retransmits the packet to the mobile station.

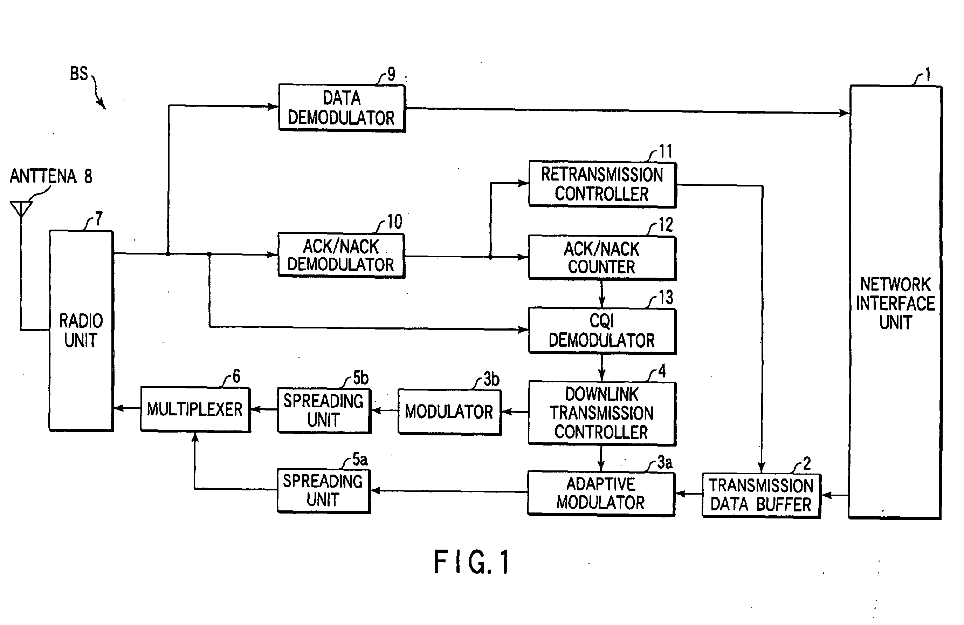

A combination of these techniques has also been proposed. For example, the following technique is described on pp. 2 to 8 and FIG. 1 of Jpn. Pat. Appln. KOKAI Publication No. 2002-64424. More specifically, the mobile station measures the quality of the downlink from the base station to the mobile station, and also measures the retransmission request transmission count. The contents of a table representing the correspondence between the downlink quality and the downlink transmission rate are rewritten in accordance with the measurement results. The mobile station requests an optimal transmission rate of the base station in accordance with the rewritten table contents. Alternatively, the mobile station notifies the base station of the measurement results, and the base station determines an optimal transmission rate on the basis of the notified measurement results.

However, this conventional technique poses the following problems. The transmission channel environment of the uplink from the mobile station to the base station readily changes under the influence of the multipath and interference wave, similar to the downlink. The measurement result or optimal transmission rate request transmitted from the mobile station to the base station may not be correctly received, demodulated, and decoded in the base station. In this case, the base station cannot appropriately control the downlink transmission rate. In other words, the conventional technique assumes that uplink information transmission is done without any error. The effects of this technique are not fully exhibited in an actual use environment.

Document EP-A-1 229 748 discloses an apparatus and method for transmitter adaptation based on received quality, the transmitter also counting the number of retransmission requests.

It is an object of the present invention to provide a radio communication apparatus and communication mode control method in a mobile communication system in which the communication mode can be properly controlled by reducing the influence of the transmission channel environment.

To achieve the above object, according to an aspect of the present invention, there is provided a radio communication apparatus comprising means for transmitting transmission data from a radio communication device serving as a communication partner via a radio channel, means for receiving information which is transmitted from the radio communication device and represents communication quality of the radio channel or a communication mode setting request corresponding to the communication quality, means for decoding the received information representing the communication quality on the basis of a decision threshold, and adaptively controlling a communication mode of the transmission data on the basis of the decoded information representing the communication quality, means for receiving a retransmission request for the transmission data that is transmitted from the radio communication device, and means for retransmitting the transmission data upon reception of the retransmission request further comprises means for measuring a reception frequency of the retransmission request, and means for adjusting the decision threshold on the basis of the measured reception frequency.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the arrangement of a base station according to the first embodiment of the present invention;
FIG. 2 is a block diagram showing the arrangement of a mobile station according to the first embodiment of the present invention;
FIG. 3 is a flow chart showing a communication mode control sequence and its contents by the base station shown in FIG. 1;
FIG. 4 is a graph for explaining expected CQI value calculation processing by the base station shown in FIG. 1;
FIG. 5 is a graph for explaining hard decision threshold adjustment processing by the base station shown in FIG. 1;
FIG. 6 is a block diagram showing the arrangement of a base station according to the second embodiment of the present invention;
FIG. 7 is a block diagram showing the arrangement of a mobile station according to the second embodiment of the present invention; and
FIG. 8 is a flow chart showing a communication mode control sequence and its contents by the base station shown in FIG. 6.

FIG. 1 is a block diagram showing the arrangement of a base station BS in a mobile communication system according to the first embodiment of the present invention. The mobile communication system employs CDMA (Code Division Multiple Access) as a radio access method between the base station BS and a mobile station MS.

A packet sent from a wire network (not shown) is received by a network interface unit 1, and then temporarily stored in a transmission data buffer 2. The transmission data buffer 2 reads out the packet at a speed corresponding to the transmission rate, and inputs the packet to an adaptive modulator 3a. The adaptive modulator 3a generates a modulated signal on the basis of the packet input from the transmission data buffer 2. The modulation method is designated by a downlink transmission controller 4. A spreading unit 5a spreads the modulated signal by a spreading code, and supplies the spread/modulated signal to a multiplexer 6.

The downlink transmission controller 4 adaptively sets the communication mode in accordance with a CQI (Channel Quality Indicator) demodulated by a CQI demodulator 13. The downlink transmission controller 4 generates a downlink control signal for notifying the mobile station MS of the set communication mode. The communication mode includes a transmission rate and modulation method. A modulator 3b generates a modulated signal on the basis of the downlink control signal generated by the downlink transmission controller 4 and a pilot signal generated by a pilot signal generator (not shown). A spreading unit 5b spreads the generated/modulated signal by a spreading code, and supplies the spread/modulated signal to the multiplexer 6.

The multiplexer 6 multiplexes the modulated signals supplied from the spreading units 5a and 5b. The multiplexer 6 converts the multiplexed/modulated signal into an analog signal, and inputs the analog signal to a radio unit 7. The radio unit 7 comprises a quadrature modulator, frequency converter, and transmission power amplifier. The radio unit 7 quadrature-converts the supplied multiplexed/modulated signal, and then upconverts the frequency to generate a radio signal. The radio unit 7 amplifies the generated radio signal to a predetermined transmission power level, and transmits the amplified signal from an antenna 8.

A radio signal transmitted from the mobile station MS is received by the antenna 8, and input to the radio unit 7. The radio unit 7 comprises a low noise amplifier, frequency converter, and quadrature demodulator. The low noise amplifier amplifies the received radio signal. The frequency converter and quadrature demodulator demodulate the amplified radio signal, and convert it into a received baseband signal. The received baseband signal is converted into a digital signal, and the digital signal is input to a demodulation unit.

The demodulation unit comprises a data demodulator 9 and ACK/NACK demodulator 10. The data demodulator 9 has a RAKE receiver. The RAKE receiver despreads and demodulates a plurality of path signals received via different transmission paths by despreading codes. The RAKE receiver locks the phases of the demodulated signals of these paths, and synthesizes the symbols. The synthesized/demodulated data is decoded, and the resultant data is output to the network interface unit 1. The network interface unit 1 performs interface processing necessary to transfer data to a wire network (not shown).

The ACK/NACK demodulator 10 despreads, demodulates, and decodes an ACK (ACKnowledge) signal and NACK (Negative ACKnowledge) signal sent from the mobile station MS. The ACK/NACK demodulator 10 supplies the decoded ACK and NACK signals to a retransmission controller 11. The retransmission controller 11 gives a data retransmission instruction to the transmission data buffer 2 upon reception of the NACK signal from the ACK/NACK demodulator 10. The transmission data buffer 2 reads out a packet to be retransmitted in accordance with the retransmission instruction. The readout packet to be retransmitted is transmitted from the antenna 8 to the mobile station MS via the adaptive modulator 3a, spreading unit 5a, multiplexer 6, and radio unit 7.

The base station BS comprises an ACK/NACK counting unit 12 and CQI demodulator 13. The ACK/NACK counting unit 12 counts in each predetermined unit time the numbers of ACK signals and NACK signals which are demodulated by the ACK/NACK demodulator 10. Every time the unit time has elapsed, the ACK/NACK counting unit 12 predicts the packet error ratio (PER) in the downlink. The ACK/NACK counting unit 12 calculates an expected CQI value on the basis of the predicted packet error ratio.

The CQI demodulator 13 adjusts the hard decision threshold used to decode the CQI, on the basis of the expected CQI value calculated by the ACK/NACK counting unit 12. The CQI demodulator 13 executes hard decision/decoding for received CQI data output from the radio unit 7 on the basis of the hard decision threshold, and supplies the decoded CQI to the downlink transmission controller 4.

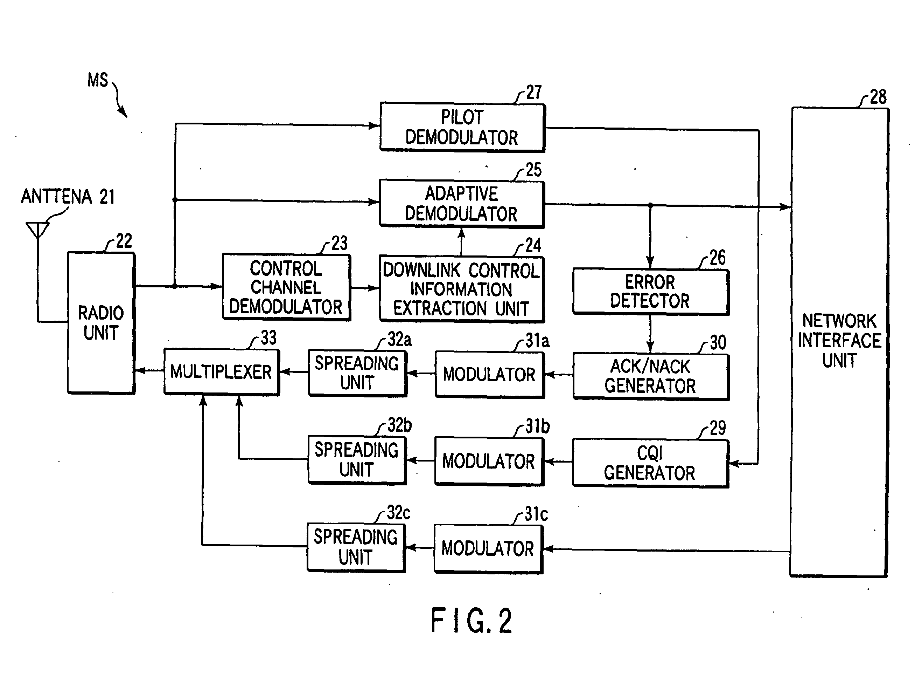

The mobile station MS is constituted as follows. FIG. 2 is a block diagram showing the arrangement of the mobile station MS.

A radio signal transmitted from the base station BS is received by an antenna 21, and input to a radio unit 22. The radio unit 22 comprises a low noise amplifier, frequency converter, and quadrature demodulator. The low noise amplifier amplifies the received radio signal. The frequency converter and quadrature demodulator demodulate the amplified radio signal, and convert it into a received baseband signal. The received baseband signal is converted into a digital signal, and the digital signal is input to a demodulation unit.

The demodulation unit comprises a control channel demodulator 23, adaptive demodulator 25, and pilot demodulator 27. The control channel demodulator 23 despreads, demodulates, and decodes the received baseband signal, thereby regenerating a downlink control signal. A downlink control information extraction unit 24 extracts a communication mode from the regenerated downlink control signal. The communication mode includes a transmission rate and modulation method.

The adaptive demodulator 25 despreads the baseband signal received by the radio unit 22, demodulates the signal in accordance with the extracted transmission rate and modulation method, and further decodes the demodulated signal. The adaptive demodulator 25 supplies the regenerated packet to a user interface unit 28. The user interface unit 28 comprises a microphone, loudspeaker, key input device, display device, and the like. Speech data contained in the decoded packet is output from the loudspeaker, and video data is displayed on the display device.

An error detector 26 detects the packet error ratio (PER) regenerated by the adaptive demodulator 25. An ACK/NACK generator 30 generates an ACK signal or NACK signal on the basis of the detected PER.

The pilot demodulator 27 despreads the baseband signal received by the radio unit 22 to demodulate a pilot signal. The pilot demodulator 27 obtains the downlink communication quality on the basis of the demodulated pilot signal. The communication quality is obtained by detecting the ratio (SIR) of signal power to interference wave power. A CQI generator 29 generates a CQI on the basis of the SIR detected by the pilot demodulator 27.

A transmission packet generated by the user interface unit 28 is input to a modulation unit. The modulation unit comprises three modulators 31a, 31b, and 31c, three spreading units 32a, 32b, and 32c, and a multiplexer 33. The modulator 31a generates a modulated signal on the basis of a transmission packet generated by the user interface unit 28. The spreading unit 32a spreads the modulated signal generated by the modulator 31a by using a spreading code, and supplies the spread signal to the multiplexer 33.

The modulator 31b generates a modulated signal on the basis of a CQI generated by the CQI generator 29. The spreading unit 32b spreads the modulated signal generated by the modulator 31b by using a spreading code different from the spreading code used by the spreading unit 32a, and supplies the spread signal to the multiplexer 33. The modulator 31c generates a modulated signal on the basis of an ACK signal or NACK signal generated by the ACK/NACK generator 30. The spreading unit 32c spreads the modulated signal generated by the modulator 31c by using a spreading code different from the spreading codes used by the spreading units 32a and 32b, and supplies the spread signal to the multiplexer 33.

The multiplexer 33 multiplexes the modulated signals supplied from the spreading units 32a, 32b, and 32c. The multiplexer 33 converts the multiplexed/modulated signal into an analog signal, and then supplies the analog signal to the radio unit 22. The radio unit 22 comprises a quadrature modulator, frequency converter, and transmission power amplifier. The radio unit 22 quadrature-converts the supplied multiplexed/modulated signal, and then upconverts the frequency to generate a radio signal. The radio unit 22 amplifies the generated radio signal to a predetermined transmission power level, and transmits the amplified signal from the antenna 21 toward the base station BS.

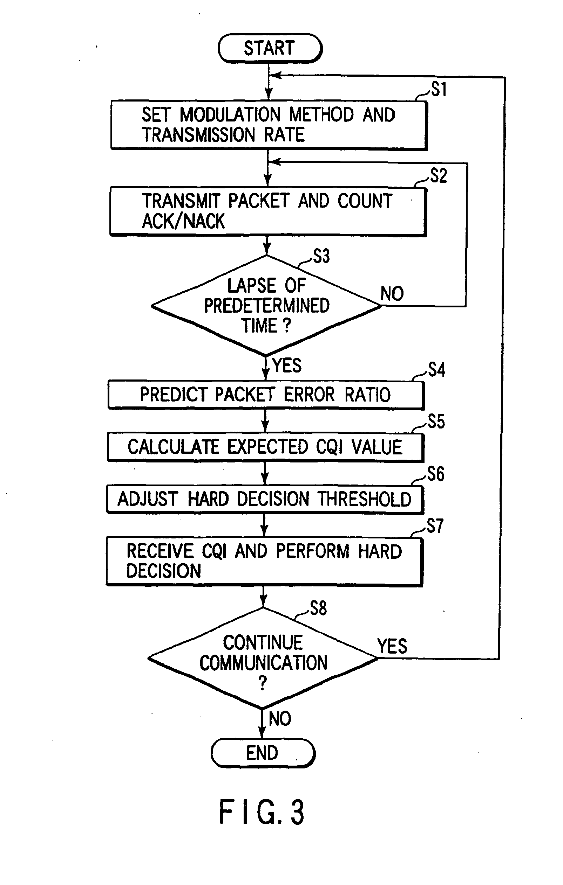

A communication mode control method in the mobile communication system having the above arrangement will be explained. FIG. 3 is a flow chart showing the control sequence and control contents of the base station which executes main steps in the communication mode control method. A case in which multimedia data packets are downloaded from the base station BS to the mobile station MS will be exemplified.

When a radio link is established between the base station BS and the mobile station MS, the communication mode, i.e., the transmission rate and modulation method are initialized by the downlink transmission controller 4 in the base station BS (step S1). After the communication mode is set, a packet is transmitted as follows in step S2.

More specifically, a packet sent from a wire network (not shown) is received by the network interface unit 1, and then temporarily stored in the transmission data buffer 2. The packet is read out from the transmission data buffer 2 at a speed corresponding to the preset transmission rate, modulated by the adaptive modulator 3a in accordance with the set modulation method, and spread by the spreading unit 5a. The resultant packet is multiplexed with a pilot signal and downlink control signal by the multiplexer 6. The multiplexed signal is upconverted to a radio signal by the radio unit 7, and the radio signal is transmitted from the antenna 8.

In the mobile station MS, the downlink SIR is measured by the pilot demodulator 27 on the basis of the reception level of the pilot signal during the packet reception period. A CQI is generated by the CQI generator 29 on the basis of the SIR measurement value, and transmitted from the radio unit 22 toward the base station BS. At the same time, the error detector 26 determines the presence/absence of an error in the received packet. In accordance with the determination result, the ACK/NACK generator 30 generates an ACK signal if no error is detected, and a NACK signal if an error is detected. The generated ACK signal or NACK signal is transmitted from the modulation unit and radio unit 22 toward the base station BS.

In the base station BS, the ACK/NACK counting unit 12 performs processing of predicting the downlink packet error ratio (PER) in parallel with packet transmission. That is, while the ACK/NACK counting unit 12 monitors the lapse of the unit time in step S3, it counts in step S2 ACK signals and NACK signals sent back from the mobile station MS. After the lapse of the unit time, the packet error ratio is calculated in step S4 on the basis of the count values of ACK signals and NACK signals. The packet error ratio is calculated by dividing the count value of NACK signals in the unit time by the sum of the count value of NACK signals and the count value of ACK signals.

After the packet error ratio is calculated, the ACK/NACK counting unit 12 executes in step S5 processing of calculating an expected CQI value. In step S6, the CQI demodulator 13 adjusts the hard decision threshold for decoding the CQI, in accordance with the expected CQI value.

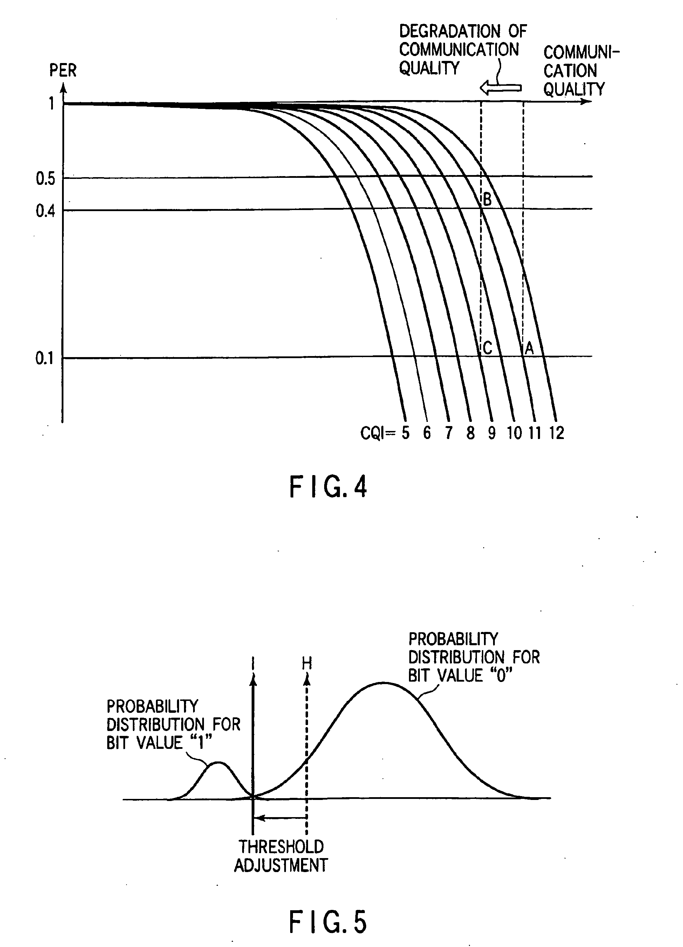

FIG. 4 is a graph showing the relationship between the downlink communication quality (SIR) and the packet error ratio (PER) using the CQI as a parameter when a packet is transmitted from the base station BS to the mobile station MS in accordance with the transmission rate and modulation method set in correspondence with each CQI. In FIG. 4, the CQI is represented by 5 bits, and the relationship between the SIR and the PER is shown for values of 5 to 12 out of values of 0 to 30 expressed by 5 bits. In general, the larger the CQI value is, the higher the efficiency of the modulation method is at a higher transmission rate. When the communication quality (SIR) is the same, the PER increases for a larger CQI value.

Assume that "11" is selected as the initial CQI value and the target PER is set to "0.1". In this case, the operating point shifts from "A" to "B" in FIG. 4. This means that the communication quality (SIR) degrades by an amount indicated by the arrow in FIG. 4. In order to maintain PER = 0.1 under the communication quality (SIR) condition corresponding to the operating point "B", a CQI value passing through an operating point "C", i.e., CQI = 9 is selected.

The mobile station MS sets the CQI value so as to come close to PER = 0.1 on the basis of the SIR measurement value by a pilot signal. The CQI value is represented by 5 bits, and transmitted to the base station BS. An error may occur in the CQI depending on the uplink transmission channel quality. Thus, the base station BS adjusts the hard decision threshold for decoding the CQI, on the basis of the expected CQI value predicted, i.e., CQI = 9 (binary number of 01001). That is, for CQI = 9, the MSB (Most Significant Bit) is "0", the second bit is "1", and the third bit is "0", at high possibility. The hard decision threshold is so adjusted as to easily obtain the above-mentioned expected value for each bit.

FIG. 5 is a graph for explaining hard decision threshold adjustment processing. Left and right normal distribution curves in FIG. 5 express probability distributions for CQI bit values "1" and "0". Assuming that "1" and "0" are determined at equal probability without predicting any expected CQI value, the area surrounded by the "1" probability distribution curve and the area surrounded by the "0" probability distribution curve are equal to each other. In this case, the hard decision threshold is set to a broken line H in FIG. 5.

When, for example, the expected CQI value is CQI = 9 and the MSB is predicted to be "0" at high probability, the area surrounded by the "0" probability distribution curve becomes larger, as shown in FIG. 5. In this case, the point at which "0" and "1" appear at equal probability deviates left in FIG. 5, and the hard decision threshold is adjusted to I in FIG. 5 in response to the deviation. In adjustment, for example, the deviation amount of the point at which "0" and "1" appear at equal probability is obtained and added to the reference value. As for each bit other than the MSB, the hard decision threshold is adjusted in response to the deviation of the "0" and "1" probability distributions.

The CQI demodulator 13 in the base station BS executes CQI decoding processing using the adjusted hard decision threshold in step S7 and subsequent steps. The hard decision threshold is used until it is newly adjusted in steps S4 to S6 upon the lapse of the next unit time. In other words, the hard decision threshold for decoding the CQI adaptively changes upon a change in downlink communication quality.

This decreases the probability at which the CQI transmitted from the mobile station MS is erroneously determined. Compared to a case in which the hard decision threshold is fixed, the CQI can be correctly determined regardless of variations in transmission channel environment. The transmission rate and modulation method can be correctly controlled in accordance with the communication quality of the transmission channel environment.

### (Second Embodiment)

In the second embodiment of the present invention, when the mobile station has a function of selecting a proper communication mode, i.e., transmission rate and modulation method on the basis of the downlink communication quality (SIR) and transmitting a request for setting the selected communication mode to the base station, the base station predicts the packet error ratio from the number of received NACK signals per unit time, calculates the expected value of the communication mode request on the basis of the predicted packet error ratio, and adjusts the hard decision threshold for decoding the setting request on the basis of the calculated expected value of the communication mode request.

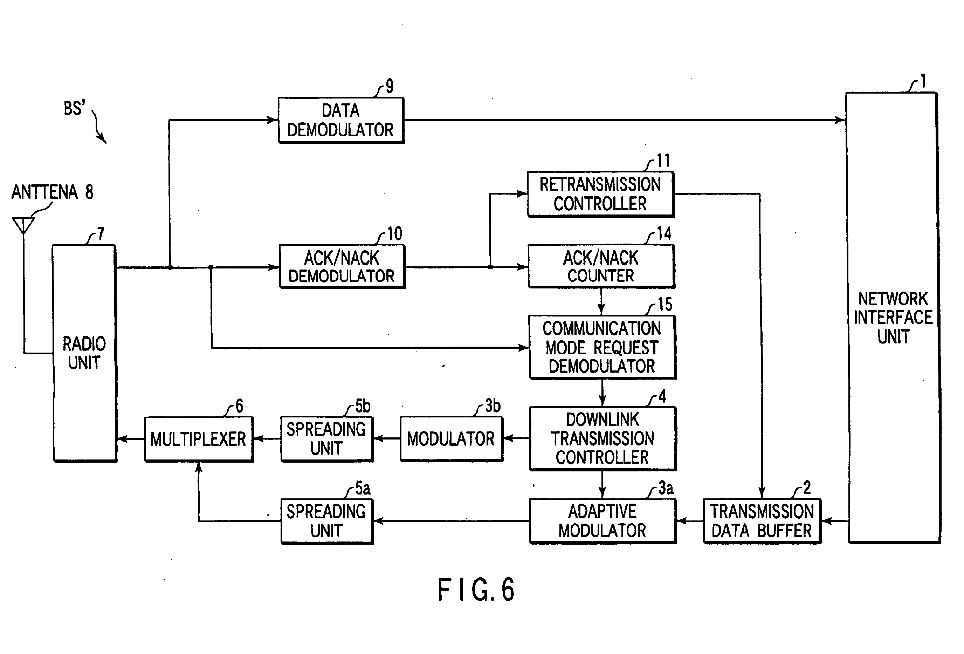

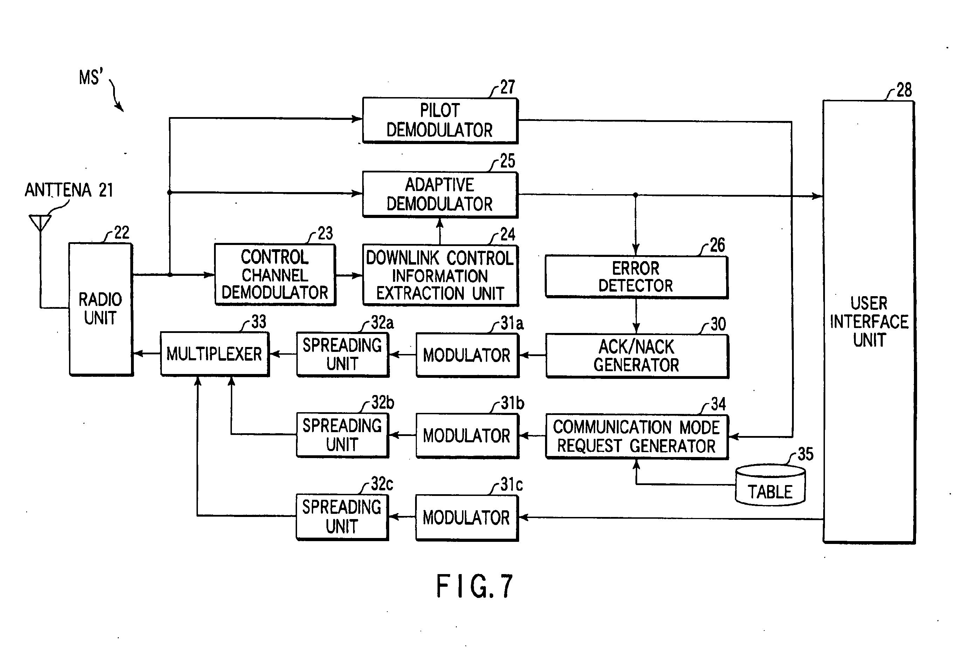

FIGS. 6 and 7 are block diagrams showing the arrangements of the base station and mobile station according to the second embodiment of the present invention. In FIGS. 6 and 7, the same reference numerals as those in FIGS. 1 and 2 denote the same parts, and a detailed description thereof will be omitted.

A base station BS' comprises an ACK/NACK counting unit 14 and communication mode request demodulator 15. The ACK/NACK counting unit 14 counts the numbers of ACK signals and NACK signals which are demodulated by an ACK/NACK demodulator 10. Every time the unit time has elapsed, the ACK/NACK counting unit 14 predicts the packet error ratio (PER) in the downlink. The ACK/NACK counting unit 14 calculates an expected communication mode request value on the basis of the predicted packet error ratio.

The communication mode request demodulator 15 adjusts the hard decision threshold for decoding the communication mode request, on the basis of the expected communication mode request value calculated by the ACK/NACK counting unit 14. The communication mode request demodulator 15 executes hard decision/decoding for received communication mode request data output from a radio unit 7 on the basis of the hard decision threshold, and supplies the decoded communication mode request to a downlink transmission controller 4.

A mobile station MS' comprises a communication mode request generator 34 and table 35. The table 35 stores information representing the correspondence between the downlink communication quality (SIR) and a proper communication mode. The communication mode request generator 34 accesses the table 35 on the basis of the SIR detected by a pilot demodulator 27, and reads out an appropriate communication mode corresponding to the SIR. The communication mode request generator 34 generates a communication mode request for the read communication mode of the base station BS'.

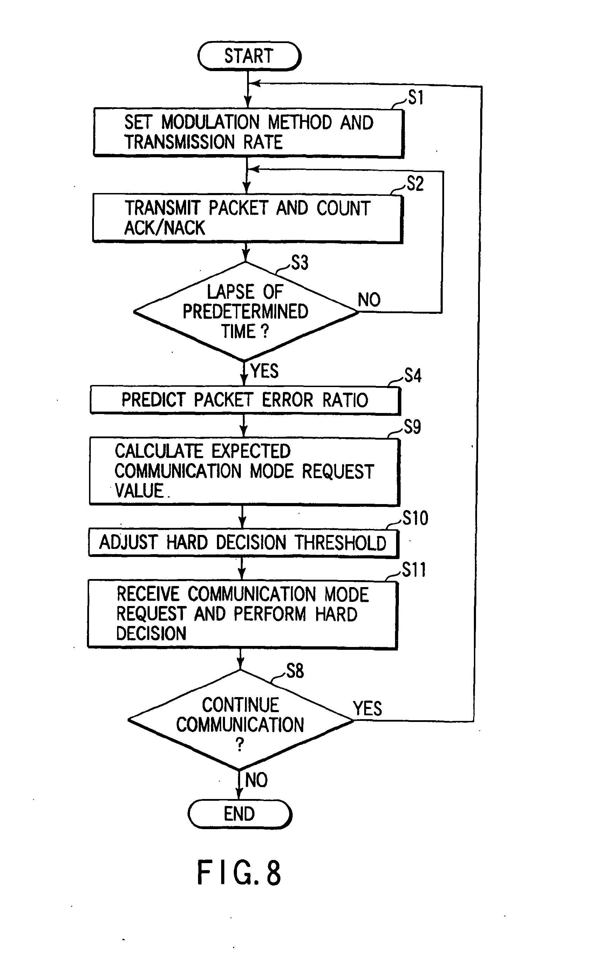

A communication mode control method in the mobile communication system having the above arrangement will be explained. FIG. 8 is a flow chart showing a communication mode control sequence and its control contents by the base station BS'. In FIG. 8, the same reference numerals as in FIG. 3 denote the same parts, and a detailed description thereof will be omitted.

In the base station BS', a packet sent from a wire network (not shown) is received by a network interface unit 1, and then temporarily stored in a transmission data buffer 2. The packet is read out from the transmission data buffer 2 at a speed corresponding to the preset transmission rate, modulated by an adaptive modulator 3a in accordance with the set modulation method, and spread by a spreading unit 5a. The resultant packet is multiplexed with a pilot signal and downlink control signal by a multiplexer 6. The multiplexed signal is upconverted to a radio signal by a radio unit 7, and the radio signal is transmitted from an antenna 8.

In the mobile station MS', the downlink SIR is measured by a pilot demodulator 27 on the basis of the reception level of the pilot signal during the packet reception period. The communication mode request generator 34 reads out a proper communication mode corresponding to the SIR measurement value from the table 35, and a request for setting this communication mode is transmitted from a radio unit 22 toward the base station BS'. At the same time, an error detector 26 determines the presence/absence of an error in the received packet. In accordance with the determination result, an ACK/NACK generator 30 generates an ACK signal if no error is detected, and a NACK signal if an error is detected. The generated ACK signal or NACK signal is transmitted from the modulation unit and radio unit 22 toward the base station BS'.

In the base station BS', the ACK/NACK counting unit 14 performs processing of predicting the downlink packet error ratio (PER) in parallel with packet transmission. That is, while the ACK/NACK counting unit 14 monitors the lapse of the unit time in step S3, it counts in step S2 ACK signals and NACK signals sent back from the mobile station MS'. After the lapse of the unit time, the packet error ratio is calculated in step S4 on the basis of the count values of ACK signals and NACK signals. The packet error ratio is calculated by dividing the count value of NACK signals in the unit time by the sum of the count value of NACK signals and the count value of ACK signals.

After the packet error ratio is calculated, the ACK/NACK counting unit 14 executes in step S5 processing of calculating an expected communication mode request value. In step S6, the communication mode request demodulator 15 adjusts the hard decision threshold for decoding the communication mode, in accordance with the expected communication mode request value.

Processing of calculating the expected communication mode request value and processing of adjusting the hard decision threshold can be done similarly to processing of calculating the expected CQI value and processing of adjusting the hard decision threshold, which are described in the first embodiment. More specifically, the deviation of "0" and "1" probability distributions are obtained for each bit of the communication mode request. The deviation amount is added to the reference value to adjust the hard decision threshold.

According to the second embodiment, the probability at which the communication mode request transmitted from the mobile station MS is erroneously determined decreases. Compared to a case in which the hard decision threshold is fixed, the communication mode request can be correctly determined regardless of variations in transmission channel environment. The transmission rate and modulation method can be correctly controlled in accordance with the communication quality of the transmission channel environment.

Note that the present invention is not limited to the above embodiments. For example, in the first and second embodiments, the packet error ratio is predicted from the number of received NACK signals per unit time. The expected value of the CQI or communication mode request is calculated on the basis of the packet error ratio, and the hard decision threshold for decoding the CQI or communication mode request is adjusted on the basis of the expected value of the CQI or communication mode request. However, the present invention is not limited to this, and the hard decision threshold for decoding the CQI or communication mode request may be adjusted on the basis of the number of received NACK signals per unit time, i.e., the retransmission request reception frequency and currently set hard decision threshold. This can be realized by preparing, e.g., a conversion table representing the relationship between the retransmission request reception frequency and the hard decision threshold, or performing calculation on the basis of a transformation from the retransmission request reception frequency into the hard decision threshold.

In the above embodiments, both the modulation method and transmission rate are adaptively controlled in accordance with the downlink SIR. However, either the modulation method or transmission rate may be controlled.

The above embodiments have exemplified a CDMA mobile communication system. However, the present invention is not limited to this, and can be applied to any system as far as the system adopts an adaptive modulation method and ARQ.

The type and arrangement of a radio communication apparatus, the communication mode control sequence, its contents, and the like can be variously modified and practiced without departing from the scope of the present invention.

## Claims

1. A radio communication apparatus comprising
means (7) for transmitting transmission data to a radio communication device serving as a communication partner via a radio channel;
means (7) for receiving information which is transmitted from the radio communication device and represents communication quality of the radio channel;
means (4, 12, 13; 4, 14, 15) for decoding the received information representing the communication quality on the basis of a decision threshold and for adaptively controlling a communication mode of the transmission data on the basis of the decoded information representing the communication quality;
means (10) for receiving a retransmission request for the transmission data that is transmitted from the radio communication device; and
means (2, 11) for retransmitting the transmission data upon reception of the retransmission request;
**characterized by**
means (12; 14) for measuring a packet error rate, hereafter referred to as PER based on the number of retransmission requests; and
means (12, 13; 14, 15) for adjusting said decision threshold on the basis of the measured PER.

2. An apparatus according to claim 1, **characterized in that** the means (12, 13; 14, 15) for adjusting the decision threshold comprises
means (S4) for predicting an error ratio of the transmission data in accordance with the measured PER,
means (S5) for calculating an expected value of the information representing the communication quality on the basis of the predicted error ratio, and
means (S6) for adjusting said decision threshold on the basis of the calculated expected value.

3. An apparatus according to claim 2, **characterized in that** the means (S5) for calculating the expected value comprises
means for calculating a deviation representing a difference between an error ratio corresponding to a reference value of the information representing the communication quality and the predicted error ratio, and
means for adding the calculated deviation to the reference value and setting a calculated value as the expected value.

4. An apparatus according to anyone of claims 1 to 3, **characterized in that** when the retransmission request includes an ACK signal representing that no error is detected in the transmission data and a NACK signal representing that an error is detected in the transmission data, the means (12) for measuring the packet error rate counts the number of ACK signals and the number of NACK signals received per unit time and divides the counted number of of NACK signals by the sum of the counted number of ACK signals and the counted number of NACK signals.

5. A radio communication apparatus according to anyone of claims 1 to 4, wherein said information representing the communication quality of the radio channel is a communication mode setting request which is transmitted from the radio communication device.

6. A communication mode control method for a mobile communication system, comprising
a step (S2) of transmitting transmission data from a first radio communication apparatus to a second radio communication apparatus via a radio channel in a first communication mode,
a step (S2) of transmitting a retransmission request for the transmission data from the second radio communication apparatus to the first radio communication apparatus,
a step (S2) of retransmitting the transmission data from the first radio communication apparatus to the second radio communication apparatus in accordance with the retransmission request,
a step (S7; S11) of receiving information which is transmitted from the second radio communication apparatus to the first radio communication apparatus and which represents communication quality of the radio channel,
a step (S1) of decoding the received information representing the communication quality on the basis of a decision threshold, and
a step (S1) of adaptively controlling a communication mode of the transmission data on the basis of the decoded information representing the communication quality,
**characterized by** further comprising
a step (S2, S3) of causing the first radio communication apparatus to measure a PER based on the number of retransmission requests transmitted from the second radio communication apparatus, and
a step (S4, S5, S6) of causing the first radio communication apparatus to adjust the decision threshold on the basis of the measured PER.

7. A method according to claim 6, **characterized in that** the step (S4, S5, S6) of adjusting the decision threshold comprises
a step (S4) of predicting an error ratio of the transmission data in accordance with the measured PER;
a step (S5) of calculating an expected value of the information representing the communication quality on the basis of the predicted error ratio, and
a step (S6) of adjusting the decision threshold on the basis of the calculated expected value.

8. A method according to claim 7, **characterized in that** the step (S5) of calculating the expected value comprises
a step of calculating a deviation representing a difference between an error ratio corresponding to a reference value of the information representing the communication quality and the predicted error ratio, and
a step of adding the calculated deviation to the reference value and setting a calculation value as the expected value.

9. A method according to anyone of claims 6 to 8, **characterized in that** when the retransmission request includes an ACK signal representing that no error is detected in the transmission data and a NACK signal representing that an error is detected in the transmission data, the step (S2, S3) of measuring the PER comprises
a step of counting each of the numbers of ACK signals and NACK signals received within a unit time, and
a step of dividing the counted number of NACK signals by a sum of the counted number of ACK signals and the counted number of NACK signals, and setting a calculated value as the reception frequency.

10. A communication mode control method according to anyone of claims 6 to 9, wherein
said information representing the communication quality of the radio channel is a communication mode setting request which is transmitted from the radio communication apparatus.

## Patentansprüche

1. Eine Funkkommunikationsvorrichtung, umfassend
Mittel (7) zum Übertragen von Übertragungsdaten an eine Funkkommunikationseinrichtung, die als ein Kommunikationspartner dient, über einen Funkkanal;
Mittel (7) zum Empfangen von Information, die von der Funkkommunikationseinrichtung übertragen wurde und die Kommunikationsqualität des Funkkanals repräsentiert;
Mittel (4, 12, 13; 4, 14, 15) zum Decodieren der die Kommunikationsqualität repräsentierenden empfangenen Information auf der Basis eines Entscheidungsgrenzwertes und zum adaptiven Steuern eines Kommunikationsmodus der Übertragungsdaten auf der Basis der decodierten Information, die die Kommunikationsqualität repräsentiert;
Mittel (10) zum Empfangen einer Weitermeldungsanfrage für die Übertragungsdaten, die von der Funkkommunikationseinrichtung übertragen wurden; und
Mittel (2, 11) zum Weitermelden der Übertragungsdaten bei Empfang der Weitermeldungsanfrage;
**gekennzeichnet durch**
Mittel (12; 14) zum Messen einer Paketfehlerrate, die im folgenden als PER bezeichnet wird, basierend auf der Anzahl von Weitermeldungsanfragen; und Mittel (12, 13; 14, 15) zum Einstellen des Entscheidungsgrenzwertes auf der Basis der gemessenen PER.

2. Eine Vorrichtung gemäß Anspruch 1, **dadurch gekennzeichnet, dass** die Mittel (12, 13; 14, 15) zum Einstellen des Entscheidungsgrenzwertes
Mittel (S4) zum Vorhersagen eines Fehlerverhältnisses der Übertragungsdaten in Übereinstimmung mit der gemessenen PER,
Mittel (S5) zum Berechnen eines erwarteten Wertes der die Kommunikationsqualität repräsentierenden Information auf der Basis des vorhergesagten Fehlerverhältnisses, und
Mittel (S6) zum Einstellen des Entscheidungsgrenzwertes auf der Basis des berechneten erwarteten Wertes
umfasst.

3. Eine Vorrichtung gemäß Anspruch 2, **dadurch gekennzeichnet, dass** die Mittel (S5) zum Berechnen des erwarteten Wertes
Mittel zum Berechnen einer Abweichung, die eine Differenz zwischen einem Fehlerverhältnis, das mit einem Referenzwert der die Kommunikationsqualität repräsentierenden Information korrespondiert, und einem vorhergesagten Fehlerverhältnis repräsentiert, und
Mittel zum Addieren der berechneten Abweichung zum Referenzwert und Setzen eines berechneten Wertes als den erwarteten Wert
umfasst.

4. Eine Vorrichtung nach einem der Ansprüche 1 bis 3, **dadurch gekennzeichnet, dass** wenn die Weitermeldungsanfrage ein ACK-Signal, das repräsentiert, dass kein Fehler in den Übertragungsdaten ermittelt wurde, und ein NACK-Signal enthält, das repräsentiert, dass ein Fehler in den Übertragungsdaten ermittelt wurde, die Mittel (12) zum Messen der Paketfehlerrate die Anzahl von ACK-Signalen und die Anzahl von NACK-Signalen misst, die pro Zeiteinheit empfangen werden, und die gezählte Anzahl von NACK-Signalen durch die Summe der gezählten ACK-Signale und der gezählten Anzahl der NACK-Signale dividiert.

5. Eine Funkkommunikationsvorrichtung nach einem der Ansprüche 1 bis 4, wobei die die Kommunikationsqualität des Funkkanals repräsentierenden Information eine Kommunikationsmoduseinstellanfrage ist, die von der Funkkommunikationseinrichtung übertragen wird.

6. Ein Kommunikationsmodus-Steuerungsverfahren für ein mobiles Kommunikationssystem, umfassend
einen Schritt (S2) zum Übertragen von Übertragungsdaten von einer ersten Funkkommunikationsvorrichtung zu einer zweiten Funkkommunikationsvorrichtung über einen Funkkanal in einem ersten Kommunikationsmodus,
einen Schritt (S2) zum Übertragen einer Weitermeldungsanfrage für die Übertragungsdaten von der zweiten Funkkommunikationseinrichtung zur ersten Funkkommunikationseinrichtung,
einen Schritt (S2) zum Weitermelden der Übertragungsdaten von der ersten Funkkommunikationseinrichtung zur zweiten Funkkommunikationseinrichtung in Übereinstimmung mit der Weitermeldungsanfrage,
einen Schritt (S7; S11) zum Empfangen von Information, die von der zweiten Funkkommunikationseinrichtung zur ersten Funkkommunikationseinrichtung übertragen wird, und die die Kommunikationsqualität des Funkkanals repräsentiert,
einen Schritt(S1) zum Decodieren der die Kommunikationsqualität repräsentierenden empfangenen Information auf der Basis eines Entscheidungsgrenzwertes, und
einen Schritt (S1) zum adaptiven Steuern eines Kommunikationsmodus der Übertragungsdaten auf der Basis der die Kommunikationsqualität repräsentierenden decodierten Information,
**gekennzeichnet durch** weiteres umfassen
eines Schrittes (S2, S3) zum Bewirken, dass die erste Funkkommunikationseinrichtung eine PER misst basierend auf der Anzahl der Weitermeldungsanfragen, die von der zweiten Funkkommunikationseinrichtung übertragen wurden, und
eines Schrittes (S4, S5, S6) zum Bewirken, dass die erste Funkkommunikationseinrichtung den Entscheidungsgrenzwert einstellt auf der Basis der gemessenen PER.

7. Ein Verfahren gemäß Anspruch 6, **dadurch gekennzeichnet, dass** der Schritt (S4, S5, S6) zum Einstellen des Entscheidungsgrenzwertes
einen Schritt (S4) zum Vorhersagen eines Fehlerverhältnisses der Übertragungsdaten in Übereinstimmung mit der gemessenen PER;
einen Schritt (S5) zum Berechnen eines erwarteten Wertes der die Kommunikationsqualität repräsentierenden Information auf der Basis des vorhergesagten Fehlerverhältnisses, und
einen Schritt (S6) zum Einstellen des Entscheidungsgrenzwertes auf der Basis des berechneten, erwarteten Wertes
umfasst.

8. Ein Verfahren gemäß Anspruch 7, **dadurch gekennzeichnet, dass** der Schritt (S5) zum Berechnen des erwarteten Wertes
einen Schritt zum Berechnen einer Abweichung, die eine Differenz zwischen einem Fehlerverhältnis, entsprechend einem Referenzwert der die Kommunikationsqualität repräsentierenden Information, und dem vorhergesagten Fehlerverhältnis repräsentiert, und
einen Schritt zum Addieren der berechneten Abweichung zu dem Referenzwert und zum Einstellen eines Berechnungswertes als den erwarteten Wert
umfasst.

9. Ein Verfahren gemäß einem der Ansprüche 6 bis 8, **dadurch gekennzeichnet, dass** wenn die Weitermeldungsanfrage ein ACK-Signal, das repräsentiert, dass kein Fehler in den Übertragungsdaten ermittelt wurde, und ein NACK-Signal enthält, das repräsentiert, dass ein Fehler in den Übertragungsdaten ermittelt wurde, der Schritt (S2, S3) zum Messen der PER
einen Schritt zum Zählen jedes der ACK-Signale und NACK-Signale, die innerhalb einer Zeiteinheit empfangen werden, und
einen Schritt zum Dividieren der gezählten Anzahl der NACK-Signale durch eine Summe der gezählten Anzahl von ACK-Signale und der gezählten Anzahl von NACK-Signale, und zum Einstellen eines berechneten Wertes als die Empfangsfrequnez
umfasst.

10. Ein Kommunikationsmodensteuerungsverfahren gemäß einem der Ansprüche 6 bis 9, wobei die die Kommunikationsqualität des Funkkanals repräsentierende Information eine Kommunikationsmodeneinstellungsanfrage ist, die von der Funkkommunikationseinrichtung übertragen wird.

## Revendications

1. Appareil de communication radio comprenant :
un moyen (7) pour émettre des données de transmission sur un dispositif de communication radio qui joue le rôle de partenaire de communication via un canal radio ;
un moyen (7) pour recevoir une information qui est émise depuis le dispositif de communication radio et qui représente une qualité de communication du canal radio ;
un moyen (4, 12, 13 ; 4, 14, 15) pour décoder l'information reçue qui représente la qualité de communication sur la base d'un seuil de décision et pour commander de manière adaptative un mode de communication des données de transmission sur la base de l'information décodée qui représente la qualité de communication ;
un moyen (10) pour recevoir une requête de re-émission pour les données de transmission qui sont émises depuis le dispositif de communication radio ; et
un moyen (2, 11) pour re-émettre les données de transmission suite à la réception de requête de re-émission,
**caractérisé par** :
un moyen (12 ; 14) pour mesurer un taux d'erreurs de paquets ci-après appelé PER sur la base du nombre de requêtes de re-émission ; et
un moyen (12, 13 ; 14, 15) pour régler ledit seuil de décision sur la base du PER mesuré.

2. Appareil selon la revendication 1, **caractérisé en ce que** le moyen (12, 13 ; 14, 15) pour régler le seuil de décision comprend :
un moyen (S4) pour prédire un taux d'erreurs des données de transmission conformément au PER mesuré ;
un moyen (S5) pour calculer une valeur attendue de l'information représentant la qualité de communication sur la base du taux d'erreurs prédit ; et
un moyen (S6) pour régler ledit seuil de décision sur la base de la valeur attendue calculée.

3. Appareil selon la revendication 2, **caractérisé en ce que** le moyen (S5) pour calculer la valeur attendue comprend :
un moyen pour calculer une déviation qui représente une différence entre un taux d'erreurs correspondant à une valeur de référence de l'information représentant la qualité de communication et le taux d'erreurs prédit ; et
un moyen pour additionner la déviation calculée à la valeur de référence et pour établir une valeur calculée en tant que valeur attendue.

4. Appareil selon l'une quelconque des revendications 1 à 3, **caractérisé en ce que**, lorsque la requête de re-émission inclut un signal ACK qui représente qu'aucune erreur n'est détectée dans les données de transmission et un signal NACK qui représente qu'une erreur est détectée dans les données de transmission, le moyen (12) pour mesurer le taux d'erreurs de paquets compte le nombre de signaux ACK et le nombre de signaux NACK qui sont reçus par temps unitaire et divise le nombre compté de signaux NACK par la somme du nombre compté de signaux ACK et du nombre compté de signaux NACK.

5. Appareil de communication radio selon l'une quelconque des revendications 1 à 4, dans lequel ladite information qui représente la qualité de communication du canal radio est une requête d'établissement de mode de communication qui est émise depuis le dispositif de communication radio.

6. Procédé de commande de mode de communication pour un système de communication mobile, comprenant :
une étape (S2) d'émission de données de transmission depuis un premier appareil de communication radio jusqu'à un second appareil de communication radio via un canal radio dans un premier mode de communication ;
une étape (S2) d'émission d'une requête de re-émission pour les données de transmission depuis le second appareil de communication radio jusqu'au premier appareil de communication radio ;
une étape (S2) de re-émission des données de transmission depuis le premier appareil de communication radio jusqu'au second appareil de communication radio conformément à la requête de re-émission ;
une étape (S7 ; S11) de réception d'une information qui est émise depuis le second appareil de communication radio sur le premier appareil de communication radio et qui représente une qualité de communication du canal radio ;
une étape (S1) de décodage de l'information reçue qui représente la qualité de communication sur la base d'un seuil de décision ; et
une étape (S1) de commande adaptative d'un mode de communication des données de transmission sur la base de l'information décodée qui représente la qualité de communication,
**caractérisé en ce qu'**il comprend en outre :
une étape (S2, S3) consistant à faire en sorte que le premier appareil de communication radio mesure un PER sur la base du nombre de requêtes de re-émission qui sont émises depuis le second appareil de communication radio ; et
une étape (S4, S5, S6) consistant à faire en sorte que le premier appareil de communication radio règle le seuil de décision sur la base du PER mesuré.

7. Procédé selon la revendication 6, **caractérisé en ce que** l'étape (S4, S5, S6) de réglage du seuil de décision comprend :
une étape (S4) de prédiction d'un taux d'erreurs des données de transmission conformément au PER mesuré ;
une étape (S5) de calcul d'une valeur attendue de l'information représentant la qualité de communication sur la base du taux d'erreurs prédit ; et
une étape (S6) de réglage du seuil de décision sur la base de la valeur attendue calculée.

8. Procédé selon la revendication 7, **caractérisé en ce que** l'étape (S5) de calcul de la valeur attendue comprend :
une étape de calcul d'une déviation qui représente une différence entre un taux d'erreurs qui correspond à une valeur de référence de l'information représentant la qualité de communication et le taux d'erreurs prédit ; et
une étape d'addition de la déviation calculée à la valeur de référence et d'établissement d'une valeur de calcul en tant que valeur attendue.

9. Procédé selon l'une quelconque des revendications 6 à 8, **caractérisé en ce que**, lorsque la requête de re-émission inclut un signal ACK qui représente qu'aucune erreur n'est détectée dans les données de transmission et un signal NACK qui représente qu'une erreur est détectée dans les données de transmission, l'étape (S2, S3) de mesure du PER comprend :
une étape de comptage de chacun des nombres de signaux ACK et de signaux NACK qui sont reçus à l'intérieur d'un temps unitaire ; et
une étape de division du nombre compté de signaux NACK par une somme du nombre compté de signaux ACK et du nombre compté de signaux NACK et d'établissement d'une valeur calculée en tant que fréquence de réception.

10. Procédé de commande de mode de communication selon l'une quelconque des revendications 6 à 9, dans lequel ladite information représentant la qualité de communication du canal radio est une requête d'établissement de mode de communication qui est émise depuis l'appareil de communication radio.
